# EUROPEAN PATENT APPLICATION

(11) **EP 2 557 614 A1**
(43) Date of publication of application: **13.02.2013**
(21) Application number: 11741820.2
(22) Date of filing: 31.01.2011
(51) Int. Cl.: H01M 2/26

(54) **SOFT PACKAGE LITHIUM BATTERY TAB MATERIAL AND ITS METHODE OF PLATING AND APPLICATION**

(30) Priority: 10.02.2010 CN 201010110127
(71) Applicant: Power Glory Battery Tech (Shenzhen) Co., Ltd, Shenzhen, Guangdong 518106 (CN); Wang, Qiming, Shenzhen, Guangdong 518106 (CN)
(72) Inventor: WANG, Qiming, Shenzhen Guangdong 518106 (CN)
(74) Representative: Delorme, Nicolas
(86) International application number: PCT/CN2011/000178
(87) International publication number: WO 2011/097949

(57) **Abstract**

A tab for soft package lithium battery and its method of plating and application are provided. The tab uses SUS430 stainless steel strip, a copper strip, an aluminum strip or a nickel strip as a substrate. A nickel plating layer is plated on one end of one side of the substrate and a tin plating layer is plated on the nickel plating layer, or the tin plating layer is plated on one end of one side of the substrate directly. The thickness of the nickel plating layer is 0.5-2um, and the thickness of the tin plating layer is 3-10um. The tab has a lower manufacturing cost, favorable weldability and appropriate thermal conductivity.

## Description

### FIELD OF THE INVENTION

The embodiments of the present invention relate to an electrode tab that is intended to be welded for connection with positive or negative electrode in a soft-packaged lithium battery.

### BACKGROUND OF THE INVENTION

In prior arts of soft-packaged lithium battery, there are, for example, aluminum tab for positive electrode, and nickel or copper tab for negative electrode.

There are some problems for welding said aluminum tabs, thus, the aluminum tab has to be connected with nickel strip. But, it is liable to be dewelded or broken. A pure nickel tab is very expensive. The welding of the tab for connection with positive or negative electrode is usually by ultrasonic or laser heating. These kinds of methods of welding produce lots of heat that is likely to affect or damage a sealing of soft-packaged lithium battery, particular the ultra-thin type. In case of overheating occurred with high power or high temperature produced when welding the tab onto the electrode terminal of soft-packaged lithium battery, which causes deforming of the aluminum-plastic envelope film, leaking of the electrolyte, and melting the lithium metal, thus, the performance and lifetime of the battery both be lowed.

Concerning aforementioned problems caused by the overheating of high power or high temperature welding, present invention provides comprehensively tested and practically proved solution.

### SUMMARY OF THE INVENTION

Present invention provides an electrode tab for soft-packaged lithium battery with lower cost of production, well-being welded capability and proper heat conductivity, and be manufactured by an easy-operating electroplating and a well-being welded application method without damaging the battery, which comprises:
A base substrate for wherein said electrode tab; the base substrate being SUS430 stainless steel strip, copper strip, aluminum strip, or nickel strip;
A nickel layer is plated onto one side surface of one end of the base substrate;
A tined layer is plated onto said nickel plating;
A tined layer is plated onto one side surface of one end of a base substrate that is a nickel strip or a nickel-coated strip;
The thickness of said nickel layer is 0.5 -2um;
The thickness of said tined layer is 3-10um;
The thickness of said base substrate is 0.03-0.10mm;

The method of electroplating the nickel and tin layers onto the non-nickel base substrate, comprising:
S1: A nickel layer is plated onto one side surface of one end of the non-nickel base substrate;
S2: A tined layer is plated onto the nickel layer;
(1) Surface pretreatment of the non-nickel base substrate before electroplating;
(2) Electroplating the nickel and tined layers by direct current (DC),
Wherein the solution for the nickel plating onto the non-nickel base substrate, comprising the following components:

| | |
|---|---|
| NiSO₄·7H₂O | 180-220g/L, |
| NiCl₂·6H₂O | 40-60g/L, |
| H₃BO₃ | 25-35g/L, |
| Sodium allyl sulfonate | 0.4-2g/L, |
| Butynediol | 0.4-0.5mL/L, |
| Saccharin | 0.8-1g/L. |

For the nickel plating, a set of electroplating parameters as below:

| | |
|---|---|
| Current density | 3-6A/dm², |
| pH value | 3.5-4.5, |
| Temperature | 40-60°C, |
| Anode | nickel plate; |

The pH value herein of the media for electroplating is adjusted by adding HCl and NaOH solution.
For the tin plating onto the nickel layer, an electrolytic solution comprising the following components:

| | |
|---|---|
| SnSO₄ | 40-55g/L, |
| H₂SO₄ | 60-80g/L, |
| 2-Naphthol | 0.3-1.0g/L, |
| Gelatin | 1-3g/L. |

For the tin plating, a set of electroplating parameters as below:

| | |
|---|---|
| Current density | 0.3-0.8A/dm², |
| Temperature | 15-30°C, |
| pH value | 3-5, |
| Anode | tin plate. |

(3) Clean the substrate which is plated with the nickel and tin layers by distilled water and dried by heat.
(4) Keep the substrate in a heating condition of 120-200°C, to remove the hydrogen which is produced during the process of electroplating.

The method of electroplating the nickel and tin layers onto the non-nickel base substrate, wherein the substrate is SUS430 stainless steel strip, the thickness is 0.03-0.10mm.

The method of electroplating the nickel and tin layers onto the non-nickel base substrate, wherein the method of electroplating the tin layers onto the nickel-coated base substrate, executes under following steps and conditions:
(1) Surface pretreatment of the nickel-coated base substrate before electroplating;
(2) Electroplating the tin layer by DC:
For the tin plating onto the nickel-coated base substrate, the electrolytic solution comprising:

| | |
|---|---|
| SnSO₄ | 40-55g/L, |
| H₂SO₄ | 60-80g/L, |
| 2-Naphthol | 0.3-1.0g/L, |
| Gelatin | 1-3g/L. |

For the tin plating, a set of electroplating parameters as below:

| | |
|---|---|
| Current density | 0.3-0.8A/dm², |
| Temperature | 15-30°C, |
| pH value | 3-5, |
| Anode | tin plate. |

(3) The substrate with the plated nickel and tin layers is cleaned with distilled water and dried by heat.
(4) Keep the substrate in a heating condition of 120-200°C, to remove the hydrogen which is produced during the process of electroplating.

In an application of the electrode tab for soft-packaged lithium battery, laser welding technology is applied to heat the back side surface which is not plated with the tined layer at the end of the base strip where the tin and/or nickel layer is plated, the energy of said laser is transformed into heat when illuminating the base strip, and conducted through the material of base strip to the plated tin layer, the tin layer is going to melt when the melting point is reached, and then weld the tin layer onto the electrode terminal of a soft package lithium battery.

Said laser welding technology comprising following parameters:

| | |
|---|---|
| Laser light wavelength | 0.8-1.06um, |
| Laser output power | 5-20W, |
| Laser output frequency | 1000-5000Hz, |
| Laser pulse width | 100nm, |
| Laser illuminating time | 8-10ms. |

The tin and nickel tiered/single tin filming tab structures herein is well-being welded, particularly for laser welding due to the melting point of tin is low, which needs less heat and time to melt the tined layer and weld the tab onto the metal, if tined layer is not apply on the tab, the material of base substrate is with much higher melting point, which needs massive heat produced by resistance, ultrasonic or argon-arc welding methods, but, said welding methods consume longer executing time, and the produced heat would affect or damage a sealing of soft-packaged lithium battery, particular the ultra-thin type. The tin and nickel tiered/single tin filming tab structures of present invention are appealed by multiple examinations, which are easy to be welded on the metal by heating the side without plating tined layer of the tined end of the base substrate with laser, thus, reach solid welding, unharmed to the battery, and low cost of production.

### BRIEF DESCRIPTION OF THE DRAWINGS

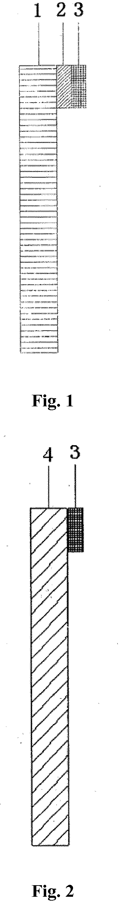

FIG. 1 is scheme of 1^{st} embodiment of present invention which is the structure of plated layers on the electrode tab.
FIG. 2 is scheme of 2nd embodiment of present invention which is the structure of plated layer on the nickel electrode tab.

### DETAILED DESCRIPTION OF PREFERRED EMBODIMENT

The embodiments of the present invention and comparison result with 3 contrast samples are disclosed as following:

### First Embodiment: non-nickel base substrate is used as the strip.

1 um of nickel layer 2 is plated onto one side surface of one end of the non-nickel base substrate 1 that herein a strip of SUS430 stainless steel with a thickness of 0.05mm is chosen, and a 5um of tined layer 3 is plated onto the 1um of nickel layer 2.
(1) Surface pretreatment of the non-nickel base substrate before electroplating:
The pretreatment is achieved with a chemical high temperature de-greasing solution, comprising following components:

| | |
|---|---|
| NaOH | 70g/L, |
| Na₂CO₃ | 40g/L, |
| Na₃PO₄ | 25g/L, |
| Na₂SiO₃ | 10g/L, |
| Temperature | 80°C, |
| Time | 3 min. |

The de-greased base substrate is cleaned with distilled water, and immersed in an activating solition of 3% volume of HCl for 1 minute.
(2) Electroplating the nickel layer by direct current (DC),
Wherein the solution for the nickel plating onto the non-nickel base substrate, comprising the following components:

| | |
|---|---|
| NiSO₄·7H₂O | 200g/L, |
| NiCl₂·6H₂O | 50g/L, |
| H₃BO₃ | 30g/L, |
| Sodium allyl sulfonate | 1g/L, |
| Butynediol | 0.5mL/L, |
| Saccharin | 0.9g/L. |

For the nickel plating, a set of electroplating parameters as below:

| | |
|---|---|
| Current density | 5A/dm², |
| pH value | 4, |
| Temperature | 50°C, |
| Anode | Nickel plate, |
| Time | 1min, |
| Thickness | 1um. |

The pH value herein of the media for electroplating is adjusted by adding HCl and NaOH solution.
(3) Electroplating the tin layer by direct current (DC),
For the tin plating onto the nickel layer, an electrolytic solution comprising the following components:

| | |
|---|---|
| SnSO₄ | 50g/L, |
| H₂SO₄ | 70g/L, |
| 2-Naphthol | 0.7g/L, |
| Gelatin | 2g/L. |

For the tin plating, a set of electroplating parameters as below:

| | |
|---|---|
| Current density | 0.5A/dm², |
| Temperature | 25°C, |
| pH value | 4, |
| Anode | Tin plate, |
| Thickness | 5um |

(4) Clean the substrate which is plated with the nickel and tin layers by distilled water and dried by heat.
(5) Keep the substrate in a heating condition of 120-200°C, to remove the hydrogen which is produced during the process of electroplating.
(6) Wherein said laser welding technology comprising following parameters:

| | |
|---|---|
| Laser light wavelength | 1.06um, |
| Laser output power | 20W, |
| Laser output frequency | 2000Hz, |
| Laser pulse width | 100nm, |
| Laser illuminating time | 10ms. |

### Second Embodiment: nickel or nickel-coated base substrate is used as the strip.

A 3-10um of tin layer 3 is plated onto one side surface of one end of the nickel strip that herein is chosen with a thickness of 0.05mm.
Excluding the procedure (2) out of the first embodiment, the procedures of the second embodiment are the same as the remaining procedures of the first embodiment.

### Comparisons of First Embodiment with Three Contrasts

### Contrast #1

**Tab: a strip of SUS430 stainless steel with a thickness of 0.05um**

| | |
|---|---|
| Laser light wavelength | 1.06um, |
| Laser output power | 37W, |
| Laser output frequency | 2000Hz, |
| Laser pulse width | 100nm, |
| Laser illuminating time | 16ms. |

### Contrast #2

**Tab: a strip of aluminum with a thickness of 0.05um**

| | |
|---|---|
| Laser light wavelength | 1.06um, |
| Laser output power | 35W, |
| Laser output frequency | 2000Hz, |
| Laser pulse width | 100nm, |
| Laser illuminating time | 15ms. |

### Contrast #3

**Tab: a strip of copper with a thickness of 0.05um**

| | |
|---|---|
| Laser light wavelength | 1.06um, |
| Laser output power | 33W, |
| Laser output frequency | 2000Hz, |
| Laser pulse width | 100nm, |
| Laser illuminating time | 15ms. |

**Table 1. Comparisons of laser output power and laser illuminating time.**

| | Output power | Illuminating time |
|---|---|---|
| Embodiment #1 | 20W | 10ms |
| Contrast #1 | 37W | 16ms |
| Contrast #2 | 35W | 15ms |
| Contrast #3 | 33W | 15ms |

It is obvious that the first embodiment utilize a lower power and a less time for welding the tab and the electrode of lithium battery.

**Table 2. Comparison of the yield of finished products.**

| | Yield of finished products |
|---|---|
| Embodiment #1 | 99.5% |
| Contrast #1 | 64% |
| Contrast #2 | 83% |
| Contrast #3 | 77.5% |

It is obvious that the first embodiment has a much better yield of finished products.

**Table 3. Comparison of the binding force.**

| | Binding force (Kgf) |
|---|---|
| Embodiment #1 | 2.27 |
| Contrast #1 | 0.59 |
| Contrast #2 | 0.89 |
| Contrast #3 | 0.81 |

It is obvious that the first embodiment has a much stronger binding force.

The scope of the present invention is not limited to be illustrated practices, and also not to be taken as limited to all of the details thereof, the modifications and variations made by the scope of present invention should be deemed as infringement to what is claimed below.

## Claims

1. An electrode tab for soft-packaged lithium battery, which comprises:
A base substrate for wherein said electrode tab; the base substrate being SUS430 stainless steel strip, copper strip, aluminum strip, or nickel strip;
A nickel layer is plated onto one side surface of one end of the base substrate;
A tined layer is plated onto said nickel plating;
A tined layer is plated onto one side surface of one end of a base substrate that is a nickel strip or a nickel-coated strip;
The thickness of said nickel layer is 0.5 -2um;
The thickness of said tined layer is 3-10um.

2. An electrode tab for soft-packaged lithium battery according to claim 1, wherein the thickness of said base substrate is 0.03-0.10mm.

3. An electrode tab for soft-packaged lithium battery according to claim 1, wherein the method of electroplating the nickel and tin layers onto the non-nickel base substrate, comprising:
S 1: A nickel layer is plated onto one side surface of one end of the non-nickel base substrate;
S2: A tined layer is plated onto the nickel layer;
(1) Surface pretreatment of the non-nickel base substrate before electroplating;
(2) Electroplating the nickel and tined layers by direct current (DC), Wherein the solution for the nickel plating onto the non-nickel base substrate, comprising the following components:
| | |
|---|---|
| NiSO₄·7H₂O | 180-220g/L, |
| NiCl₂·6H₂O | 40-60g/L, |
| H₃BO₃ | 25-35g/L, |
| Sodium allyl sulfonate | 0.4-2g/L, |
| Butynediol | 0.4-0.5mL/L, |
| Saccharin | 0.8-1g/L. |
For the nickel plating, a set of electroplating parameters as below:
| | |
|---|---|
| Current density | 3-6A/dm², |
| pH value | 3.5-4.5, |
| Temperature | 40-60°C, |
| Anode | nickel plate; |
The pH value herein of the media for electroplating is adjusted by adding HCl and NaOH solution.
For the tin plating onto the nickel layer, an electrolytic solution comprising the following components:
| | |
|---|---|
| SnSO₄ | 40-55g/L, |
| H₂SO₄ | 60-80g/L, |
| 2-Naphthol | 0.3-1.0g/L, |
| Gelatin | 1-3g/L. |
For the tin plating, a set of electroplating parameters is as below:
| | |
|---|---|
| Current density | 0.3-0.8A/dm², |
| Temperature | 15-30°C, |
| pH value | 3-5, |
| Anode | tin plate. |
(3) Clean the substrate which is plated with the nickel and tin layers by distilled water and dried by heat.
(4) Keep the substrate in a heating condition of 120-200°C, to remove the hydrogen which is produced during the process of electroplating.

4. The method of electroplating the nickel and tin layers onto the non-nickel base substrate according to claim 3, wherein the substrate is SUS430 stainless steel strip, which the thickness is 0.03-0.10mm.

5. The method of electroplating the nickel and tin layers onto the non-nickel base substrate according to claim 3, wherein the method of electroplating the tin layers onto the nickel-coated base substrate, executes under following steps and conditions:
(1) Surface pretreatment of the nickel-coated base substrate before electroplating;
(2) Electroplating the tin layer by DC:
For the tin plating onto the nickel-coated base substrate, the electrolytic solution comprising:
| | |
|---|---|
| SnSO₄ | 40-55g/L, |
| H₂SO₄ | 60-80g/L, |
| 2-Naphthol | 0.3-1.0g/L, |
| Gelatin | 1-3g/L. |
For the tin plating, a set of electroplating parameters as below:
| | |
|---|---|
| Current density | 0.3-0.8A/dm², |
| Temperature | 15-30°C, |
| pH value | 3-5, |
| Anode | tin plate. |
(3) The substrate with the plated nickel and tin layers is cleaned with distilled water and dried by heat.
(4) Keep the substrate in a heating condition of 120-200°C, to remove the hydrogen which is produced during the process of electroplating.

6. An application of the electrode tab for soft-packaged lithium battery according to claim 1, laser welding technology is applied to heat the back side surface which is not plated with the tined layer at the end of the base strip where the tin and/or nickel layer is plated, the energy of said laser is transformed into heat when illuminating the base strip, and conducted through the material of base strip to the plated tin layer, the tin layer is going to melt when the melting point is reached, and then weld the tin layer onto the electrode terminal of a soft package lithium battery.

7. An application of said electrode tab for soft-packaged lithium battery according to claim 6, wherein said laser welding technology comprising following parameters:
| | |
|---|---|
| Laser light wavelength | 0.8-1.06um, |
| Laser output power | 5-20W, |
| Laser output frequency | 1000-5000Hz, |
| Laser pulse width | 100nm, |
| Laser illuminating time | 8-10ms. |
